**Europäisches Patentamt**

**European Patent Office**

**Office européen des brevets**

(19)

(11) Veröffentlichungsnummer: **0 168 351**
**B1**

## (12) EUROPÄISCHE PATENTSCHRIFT

(45) Veröffentlichungstag der Patentschrift:
14.09.88

(51) Int. Cl.⁴: **B 23 K 26/04**

(21) Anmeldenummer: **85810307.0**

(22) Anmeldetag: **04.07.85**

(54) **Laser-Pattern-Generator und Verfahren zu dessen Betrieb.**

(30) Priorität: **10.07.84 CH 3337/84**
**22.05.85 CH 2174/85**

(43) Veröffentlichungstag der Anmeldung:
**15.01.86 Patentblatt 86/3**

(45) Bekanntmachung des Hinweises auf die Patenterteilung:
**14.09.88 Patentblatt 88/37**

(84) Benannte Vertragsstaaten:
**AT BE CH DE FR GB IT LI LU NL SE**

(56) Entgegenhaltungen:
**US - A - 3 626 141**

**PATENTS ABSTRACTS OF JAPAN, Band 7, Nr. 250 (M-254)[1395], 8. November 1983, Seite 118 M 254; & JP - A - 58 135 788 (HITACHI SEISAKUSHO K.K.) 12-08-1983 PATENTS ABSTRACTS OF JAPAN, Band 6, Nr. 267 (M-182)[1145], 25. Dezember 1982, Seite 102 M 182; & JP - A - 57 159 286 (MITSUBISHI DENKI K.K.) 01-10-1982 CONFERENCE ON LASER AND ELECTROOPTICAL SYSTEMS, 7.-9. Februar 1978, Seiten 90-92, Digest of Technical Papers, Optical Society of America, IEEE, Washington, US; M.P. FEDER et al.: "Nitrogen-pumped dye laser tool for fabricating LSI connections"**

(73) Patentinhaber: **LASARRAY HOLDING AG,**
**CH-8512 Thundorf (CH)**

(72) Erfinder: **Mayor, Jean-Michel, Dr., Av. Collonges 33,**
**CH-1004 Lausanne (CH)**
Erfinder: **Steffen, Jürg, Dr., Dorf, CH-3655 Sigriswil (CH)**
Erfinder: **Wüthrich, Peter, Brunnenwiesstrasse 6,**
**CH-8500 Frauenfeld (CH)**

(74) Vertreter: **Frauenknecht, Alois J. et al, c/o PPS Polyvalent Patent Service AG Mellingerstrasse 1,**
**CH-5400 Baden (CH)**

## Beschreibung

Die vorliegende Erfindung betrifft ein Verfahren und eine Vorrichtung zum Feststellen von Referenzdaten zur Positionsbestimmung und zur Korrektur von mechanischen Bewegungen beim Schreiben von Linien mit einem Schreiblaserstrahl in einem Werkstück mit einem metallisierten, dreidimensionalen, integrierten Schaltkreis. Die vorgenannte Vorrichtung wird kurz als «Laser-Pattern-Generator» bezeichnet.

In der europäischen Patentanmeldung Veröffentlichungs-Nr. 0 088 045 ist ein Verfahren zur Herstellung elektrisch leitender Bereiche in integrierten monolythischen Halbleiteranordnungen sowie danach hergestellte Halbleiteranordnung hoher Packungsdichte beschrieben.

Bei der Herstellung kundenspezifischer integrierter Schaltungen werden handelsübliche Siliziumscheiben mit P- und N- resp. N- und P-Strukturen verwendet, auf welchen je nach Verwendungszweck spezifische Kontaktflächen zur Verbindung dieser Strukturen erzeugt werden müssen. Im Gegensatz zu bekannten Technologien werden auf einer Siliziumscheibe galvanisch leitende Bereiche mit standardisierten Aussparungen, welche nach einem vorbestimmten Raster angeordnet sind, beispielsweise durch eine Ätz- oder Auftragungstechnik erzeugt. Je nach der zu erzielenden Schaltungskonfiguration wird nun zwischen diesen Aussparungen die leitfähige Schicht aus Aluminium mittels eines Elektronen- oder elektromagnetischen Strahls direkt oder indirekt entfernt. Besonders geeignet ist hierfür ein Laserstrahl, welcher auf einfache Weise positioniert und gesteuert werden kann und zur Belichtung einer photosensitiven Schicht dient. Dazu werden die Siliziumscheiben relativ zum Laserstrahl kontinuierlich bewegt entlang dem vorbestimmten Raster und die Laserleistung wird mit einem Modulator ein- und ausgeschaltet entsprechend der gewünschten Abtragungsgeometrie. Der Rasterabstand ist in der Grössenordnung von 1–7 µm, die Breite der abgetragenen Linien ist 0,4–2 µm und die Bearbeitungsgeschwindigkeit ist in der Grössenordnung von 1–2 Stunden pro 4″ Siliziumscheibe. Daraus ergibt sich eine Bewegungsgeschwindigkeit von 30–100 cm/s und eine Positionstoleranz von 0,3–2,5 µm bei einer Verschiebelänge von 4″. Diese Werte der Positionstoleranz können mit mechanischen Verschiebeeinheiten nicht erreicht werden. Die Herstellung der insularen leitenden Bereiche erfolgt anschliessend durch eine Photo-Ätztechnik. Durch dieses Verfahren kann auf teure anwendungsspezifische Photomasken verzichtet werden. Eine entsprechend hergestellte Halbleiteranordnung weist auf ihrer leitenden Schicht die nach dem vorgegebenen Raster angeordneten Aussparungen auf, die End- und/oder Eckpunkte insularer leitender Bereiche darstellen.

Die Aufgabe der vorliegenden Erfindung ist, ein Verfahren und eine Vorrichtung der eingangs genannten Art zu schaffen, die eine präzise gegenseitige Führung des Schreiblaserstrahls in bezug auf das Werkstück auch bei dreidimensionalen Strukturen sichert und sowohl eine Positionsbestimmung bzw. Synchronisation, wie auch eine Positionskorrektur, bzw. Korrektur der mechanisch nicht linearen Bewegung ermöglicht.

Dieses Verfahren und diese Vorrichtung sollen die Erstellung von z.B. 2 µm breiten Trennflächen, d.h. von sogenannten Linien, mit einer Geschwindigkeit von über 300 mm/s ermöglichen.

In der als Zwischenliteratur veröffentlichten europäischen Patentanmeldung Veröffentlichungs-Nr. 0 128 993 ist ein Verfahren und eine Vorrichtung beschrieben, bei welchen zusätzlich zum Schreiblaserstrahl auch ein Tastlaserstrahl verwendet wird, der zum Abtasten der Oberfläche des Werkstückes bestimmt ist. Die reflektierte Strahlung wird in einer Differentialfotodiode empfangen und ausgewertet. Die ausgewerteten Messungen werden dann für die automatische Erfassung oder Regulation der relativen Bewegung des Werkstückes in bezug auf den Schreiblaserstrahl verwendet. Diese Ausführungsform löst die vorgenannte Aufgabe nur teilweise, weil bei dreidimensionalen Strukturen in bezug auf verschiedene Einfallswinkel des Tast- und des Schreiblaserstrahls die reflektierten Strahlen die Informationen teilweise verfälschen.

Die vorgenannte Aufgabe wird jedoch dadurch gelöst, dass der metallisierte Raster des Werkstückes während der linienartigen Arbeitsbewegungen mit dem mittels eines Modulators modulierten d.h. abgeschwächten oder nicht abgeschwächten Schreiblaserstrahl oder einem auf dieselbe Achse gebrachten Tastlaserstrahl abgetastet wird, dass der vom Werkstück reflektierte Laserstrahl in wenigstens einem Strahlendetektor der aus mehreren Feldern besteht empfangen und danach ausgewertet wird, wobei die ausgewerteten Signale zur Positionsbestimmung und zur Korrektur der Relativbewegung des Werkstückes und des Schreiblaserstrahls verwendet werden. Der Vorteil der Erfindung ist darin zu sehen, dass das vorgenannte Verfahren eine präzise Führung der gegenseitigen Lage des Werkstückes und des Schreiblaserstrahls ermöglicht und zwar auch in dreidimensionalen Strukturen, bei welchen das Streulicht entsteht und das Feststellen der Referenzdaten verfälschen könnte, wobei der Schreiblaserstrahl sowohl beim Schreiben wie im eventuell abgeschwächten Zustand zum Abtasten verwendet werden kann.

Diese Lösung signalisiert nicht nur eine eventuelle Abweichung von der gewünschten Richtung sondern auch die Richtung, in welcher diese Abweichung stattfindet. Dies ermöglicht die Auswertung einer eventuellen Abweichung und deren automatische Korrektur.

Nach einer Weiterausbildung gemäss dem Anspruch 2 werden der oder die Laserstrahlen senkrecht oder mit einer Abweichung bis ±10° auf die bearbeitete Fläche des integrierten Schaltkreises des Werkstückes gesendet. In dem angegebenen Toleranzbereich arbeitet der Schreiblaserstrahl bzw. der Abtastlaserstrahl ausreichend zuverlässig.

Gemäss dem Anspruch 3 wird die Korrektur der von der Linie abweichenden Bewegung des Werkstücks mit einem steuerbaren Strahlablenker, z.B. mit steuerbarem Umlenkspiegel vor dem Objektiv und/oder mit steuerbarer schräggestellter Planplatte nach dem Objektiv und/oder mit steuerbarer Verschiebung des Objektives durchgeführt. Durch die genannten verschiedenen Verfahrensschritte erreicht man mit einfachen Mitteln die gewünschte Korrektur.

Gemäss dem Anspruch 4 ist es zweckmässig, wenn ein Modulationssignal des Schreiblaserstrahls den Verstärkungsfaktor eines Signalverstärkers direkt steuert, so dass auch bei unterschiedlicher Strahlleistung gleiche Ausgangssignale erreicht werden.

Nach einer Weiterentwicklung gemäss Anspruch 5 fällt der polarisierte Schreiblaserstrahl durch einen polarisierenden Strahlteiler als Analysator des elektrooptischen Modulators-Strahlschalters auf die bearbeitete Fläche des Werkstücks und der Strahlendetektor erhält in beiden Zuständen des Modulators-Strahlschalters dieselbe Leistung.

Gemäss der vorteilhaften Lösung nach Anspruch 6 wird zusätzlich zum Schreiblaserstrahl ein Tastlaserstrahl verwendet, welcher mit einem dichroitischen Strahlteiler auf dieselbe Achse gebracht wird und denselben Strahlengang durchläuft wie der Schreiblaserstrahl, somit werden für die Wellenlänge des Schreiblaserstrahls ungünstige Oberflächenzustände der integrierten Schaltung des Werkstückes ausgeglichen und die Wellenlänge des Tastlaserstrahls wird von derjenigen des Schreiblaserstrahls unterschiedlich gewählt. Diese Lösung ist in dem Fall notwendig, wenn man zwei wesentlich verschiedene Wellenlängen in bezug auf die Oberfläche des bearbeiteten Werkstückes benötigt.

Es ist vorteilhaft, wenn gemäss dem Anspruch 7 neben dem Signal des reflektierten Laserstrahls das diffusgestreute Licht mit einem zusätzlichen Detektor gemessen und das Verhältnis der beiden Signale gebildet wird und dadurch die unterschiedliche lokale Oberflächenbeschaffenheit der integrierten Schaltungen des Werkstückes, wie Reflektions- und Streuverhalten der metallisierten Oberfläche und der darunter liegenden Materialien, kompensiert werden. Mit Hilfe dieses Verfahren werden eventuelle Fehler verhindert, die infolge von verschiedenen Materialien oder verschiedener Bearbeitung der Oberfläche der Materialien entstehen könnten.

Besonders vorteilhaft ist es, wenn gemäss Anspruch 8 der Schreiblaserstrahl (Blaustrahl) und der Tastlaserstrahl (Rotstrahl) in einem Laserstrahlensammler mit einem Schreiblaserstrahlteiler und einem Tastlaserstrahlspiegel in einen Objektivkopf reflektiert werden und wenn ein Teil des Schreiblaserstrahls mit dem Schreiblaserstrahlteiler in einen Schreiblaserstrahldetektor abgezweigt wird. Der Vorteil dieser Weiterentwicklung besteht darin, dass im Laserstrahlensammler beide Laserstrahlen präzis ausgerichtet werden können, was zusätzlich beim Schreiblaserstrahl durch den zuständigen Schreiblaserstrahldetektor kontrolliert und bzw. gesteuert wird. Es ist zweckmässig, wenn der metallisierte, dreidimensionale, integrierte Schaltkreis mit einer Fotolackschicht bedeckt ist, die vom Schreiblaser belichtet wird.

Gemäss einer Weiterbildung nach Anspruch 9 werden der Schreiblaserstrahl und der Tastlaserstrahl im Laserstrahlensammler auf derselben Achse auf einen Tastlaserstrahlteiler des Objektivkopfes geführt, von dem der Tastlaserstrahl und der Schreiblaserstrahl durch das Objektiv auf das Werkstück geführt werden. Ein Teil des reflektierten Tastlaserstrahls wird durch den Tastlaserstrahlteiler in einen Revolverkopf reflektiert. Der Vorteil ist darin zu sehen, dass die gemeinsame Führung des Schreiblaserstrahls und des Tastlaserstrahls die Präzision der Funktion weiter erhöht, weil man wenigstens in einem bestimmten Teil des Strahlenganges für beide Laserstrahlen dieselben optischen Bestandteile verwenden kann.

Gemäss Anspruch 10 ist es zweckmässig, wenn die in Detektoren und/oder aus dem Objektivkopf und/oder aus dem Revolverkopf festgestellten Laserlicht-Signale ausgewertet werden und die Funktionslage somit erfasst oder erreicht wird. Dieses Verfahren kann mit an sich bekannten elektronischen Mitteln automatisch mit ausreichender Genauigkeit arbeiten.

Die Vorrichtung zur Durchführung des Verfahrens nach Anspruch 1 enthält gemäss Anspruch 11 ein Schreiblasergerät für die Erzeugung eines Schreiblaserstrahls mit nachgeschaltetem Modulator, einen Aufweiter und ein Objektiv und für die Auswertung der empfangenen Signale ist ein Strahlteiler des vom Wertstück reflektierten Lichtes einem Detektor mit mehreren Feldern zugeordnet.

Gemäss einer Weiterentwicklung ist nach Anspruch 12 der Strahlteiler ein polarisierender Strahlteiler, welcher als Analysator des elektrooptischen Modulators vorgesehen ist.

Eine vorteilhafte Ausführungsform der Vorrichtung gemäss Anspruch 13 besteht darin, dass die Laserschreibvorrichtung zusätzlich ein Tastlasergerät mit einer vom Schreiblasergerät unterschiedlichen Wellenlänge enthält und dass die Vorrichtung mit einem dichroitischen Strahlteiler zum Überlagern des Tastlaserstrahls auf die Achse des Schreiblaserstrahls und zum nachträglichen Separieren des Tastlaserstrahls auf einen Detektor versehen ist. Die Verwendung des dichroitischen Strahlteilers ermöglicht eine einfache Auswertung bei Verwendung von zwei Lasern mit verschiedenen Wellenlängen.

Nach einer vorteilhaften Variante gemäss Anspruch 14 enthält eine Steuervorrichtung zum Erreichen der richtigen gegenseitigen Lage des integrierten Schaltkreises und der Laserstrahlung einen Regelkreis, welcher aus einem Operationsverstärker mit nachgeschaltetem Hochspannungsverstärker und mindestens einem Piezoelement besteht. Das wenigstens eine Piezoelement ist zur mechanischen sehr feinen und schnellen Steuerung der beweglichen Teile insbesondere geeignet.

Nach einer vorteilhaften Weiterentwicklung gemäss Anspruch 15 bilden der Objektivkopf mit dem Revolverkopf zum Empfang der Laserstrahlen ein gemeinsames Optikmodul, dessen optischer Verbindungsteil nur der Tastlaserstrahlteiler ist. Diese Lösung ist besonders zweckmässig, weil zwischen dem Objektivkopf und dem Revolverkopf kein Umlenkspiegel steht, der die Abtastfläche des Detektors und damit dessen Geschwindigkeit beeinflusst.

Es ist vorteilhaft, wenn nach Anspruch 16 der Laserstrahlensammler mit einem Schreiblaserstrahldetektor versehen ist. Diese Konstruktion ermöglicht, die Richtung und eventuell auch die Breite des Schreiblaserstrahls gleich hinter der Schreiblaserstrahlquelle zu korrigieren und eventuelle Ungenauigkeiten zu erfassen.

Nach einer bevorzugten Ausführungsform gemäss Anspruch 17 ist der Revolverkopf mit wenigstens zwei der drei Einheiten: Tastlaserstrahldetektor, Scherungs-Interferometer-Okular und Mikroskopokular mit Fadenkreuz, versehen. Durch diese Anordnung werden in der unmittelbaren Nähe des Objektivkopfes wenigstens zwei für die Kontrolle der Funktionsweise der Vorrichtung zweckmässige Apparate angeordnet. Die Verbindung dieser Funktionsteile mit dem Revolverkopf ist sehr platzsparend und ermöglicht die beliebige Wahl einer bestimmten optischen Einheit des Objektivkopfes.

Nach einer Weiterbildung gemäss Anspruch 18 ist die Schreiblaserstrahlquelle und/oder die Tastlaserstrahlquelle mit je wenigstens einer Lochblende innerhalb des Aufweiters versehen. Diese Massnahme sichert ausreichend bildinformationsfreie Laserstrahlen, wie sie bei den neuartigen Verfahren zweckmässig sind. Die Lochblende wird auch als «pinhole» bezeichnet.

Nach Anspruch 19 ist zweckmässigerweise das Mikroskopokular des Objektivkopfes mit einem Schreiblasersperrfilter versehen. Diese Lösung verhindert, dass das menschliche Auge mit einer zu hohen Strahlungsleistung eventuell beschädigt wird.

Nach einer Weiterbildung nach Anspruch 20 ist in Richtung der auf derselben Achse geführten Schreib- und Tastlaserstrahlen hinter dem Tastlaserstrahlteiler ein Detektor angeordnet. Dieser weitere Detektor kann die Richtung des gemeinsamen Strahlenganges der Tast- und Schreiblaserstrahlen kontrollieren.

Die Erfindung wird anhand mehrerer Zeichnungen näher erläutert.

Es zeigt:

Fig. 1 eine schematische Anordnung der besonders vorteilhaften erfindungsgemässen beispielsweisen Ausführungsform, wobei die Fig. 1a im linken Teil in Draufsicht und die Fig. 1b im rechten Teil in Vorderansicht gezeichnet sind,

Fig. 2 eine Vorderansicht auf den Laserstrahlensammler aus der Figur 1a,

Fig. 3 eine Draufsicht auf den Laserstrahlensammler gemäss Fig. 2,

Fig. 4 ein Optikmodul, bestehend aus einem Objektivkopf und einem Revolverkopf, in teilweisem Schnitt,

Fig. 5 den Schnitt V–V aus der Fig. 4,

Fig. 6 eine Draufsicht auf den Revolverkopf aus der Fig. 4,

Fig. 7 eine beispielsweise Ausführungsform eines Detektors mit mehreren Feldern,

Fig. 8 eine andere beispielsweise erfindungsgemässe Lösung, bei der das Abtasten und das Schreiben mit demselben Laserstrahl durchgeführt wird,

Fig. 9 eine Ausführungsform mit polarisiertem Schreiblaserstrahl und einem polarisierenden Strahlteiler,

Fig. 10 eine beispielsweise Ausführungsform mit zwei Lasern mit verschiedenen Wellenlängen,

Fig. 11 eine beispielsweise Lösung, bei der der Tastlaserstrahl senkrecht auf das Werkstück fällt und zwei Strahlteiler vorgesehen sind,

Fig. 12 eine Variante der Lösung gemäss der Fig. 11, bei der ein polarisierender Strahlteiler verwendet wird,

Fig. 13 eine andere Variante, in der ein dichroitischer Strahlteiler für zwei verschiedene Laserstrahlen Verwendung findet,

Fig. 14 einen schematischen Schnitt durch den Optikkopf, wobei sowohl der reflektierte Laserstrahl als auch das diffuse Licht ausgewertet werden,

Fig. 15 ein Werkstück mit metallisiertem Raster und beispielsweise angeordneten Laserflecken und

Fig. 16a bis 16c drei Intensitätverteilungen, die der Lage der Laserflecke in der Fig. 15 entsprechen.

Gemäss Fig. 1a sind die Schreiblaserstrahlquelle A und die Tastlaserstrahlquelle B parallel mit optischen Achsen in horizontaler Lage angeordnet. Die Schreiblaserstrahlquelle A enthält ein Schreiblasergerät 1, hinter welchem sich ein Laserstrahlschalter 2 zum Ausschalten des Schreiblaserstrahls 7 bei offenem Gerät befindet. Eine Lochblende 2' ist in einem Aufweiter 4 des Schreiblasergeräts 1 angeordnet. Zwischen diesen Bestandteilen befindet sich in der optischen Achse ein Modulator 3. Linsen des Aufweiters 4 sind mit der Ziffer 4' bezeichnet und die ganze Schreiblaserstrahlquelle A ist in einem Gehäuse 5 gelagert. Der Modulator 3 und der Aufweiter 4 sind mit einstellbaren Befestigungselementen 6 im genannten Gehäuse 5 gehalten. Das ganze Gehäuse 5 ist ebenfalls mit einstellbaren Befestigungselementen 6 versehen, die ermöglichen, die optische Achse dieser Schreiblaserstrahlquelle A richtig zu ordnen. Der Schreiblaserstrahl ist mit Bezugsziffer 7 bezeichnet. Die Tastlaserstrahlquelle B ist in einem Gehäuse 8 gelagert. Sie enthält ein Tastlasergerät 9, aus welchem ein Tastlaserstrahl 9' in den Aufweiter 10 der Tastlaserstrahlquelle B geleitet ist. Auch dieser Aufweiter 10 enthält zusätzlich zu den schon erwähnten Linsen 4' eine Lochblende 11. Die Tastlaserstrahlquelle B enthält auch weitere Elemente, die schon bei der Beschreibung der Schreiblaserstrahlquelle A erwähnt wurden.

Gleiche Teile sind in allen Zeichnungen mit denselben Bezugsziffern versehen.

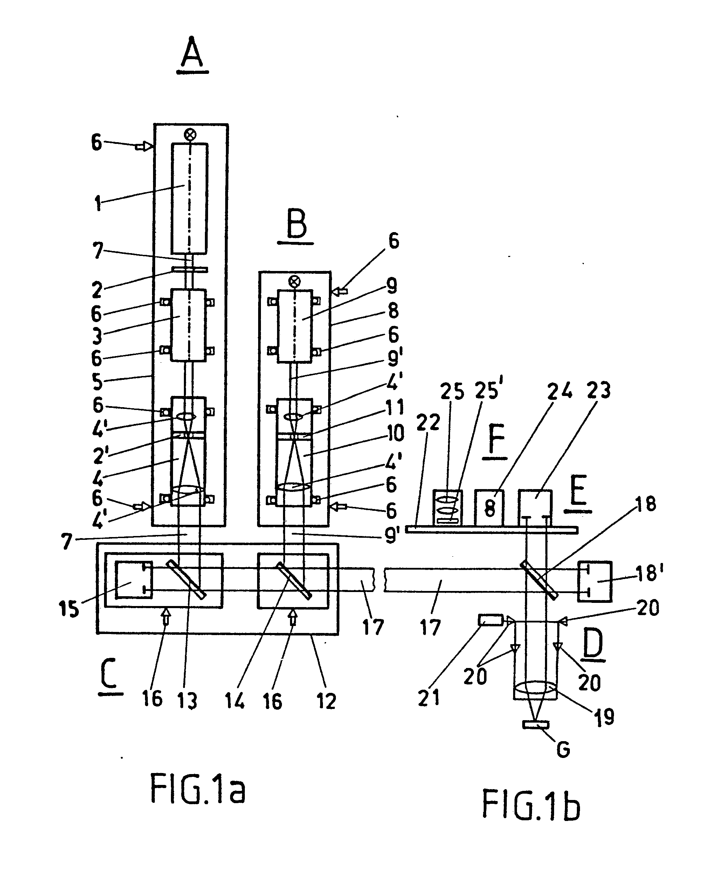

Aus dem Tastlasergerät 9 wird ein Tastlaserstrahl 9' in den Aufweiter 10 geführt. Die Bestandteile der Tastlaserstrahlquelle sind in einem Gehäuse 8 gelagert, das gleich wie das Gehäuse 5 der Schreiblaserstrahlquelle A mit einstellbaren Befestigungselementen 6 in die richtige Position gebracht werden kann. In der Richtung der optischen Achsen des Schreiblaserstrahls 7 und des Tastlaserstrahls 9' befindet sich ein Laserstrahlensammler C. Dieser enthält in einem Gehäuse 12 einen Schreiblaserstrahlteiler 13 und einen Tastlaserstrahlspiegel 14, die in der Fig. 1a in Draufsicht dargestellt sind. Diese Elemente sind einstellbar mittels Einstellelementen 16 im genannten Gehäuse 12 gelagert. Links vom Schreiblaserstrahlteiler 13 befindet sich ein Schreiblaserstrahldetektor 15, der die richtige Ausgangslage des Schreiblaserstrahls 7 kontrolliert. Der reflektierte Schreiblaserstrahl 7 und der reflektierte Tastlaserstrahl 9' verbinden sich auf einer derselben Achse 17, die dann direkt in die Fig. 1b führt. Diese Fig. 1b weist eine vertikale optische Achse auf. Der gemeinsame Strahlengang 17 fällt zuerst auf einen Tastlaserstrahlteiler 18. Von diesem geht der überwiegende Teil der Strahlung in das Objektiv 19 des Objektivkopfes D und weiter auf das Werkstück D. In der Richtung der auf derselben Achse geführten Schreib- und Tastlaserstrahlen 17 befindet sich hinter dem Tastlaserstrahlteiler 18 ein Detektor 18'. Die Aufgabe dieses Detektors 18' ist, den richtigen Strahlengang 17 zu überwachen. Das Objektiv 19 weist Einstellelemente 20 auf, wobei einige von ihnen mit einem piezoelektrischen Antrieb 21 versehen sind. Direkt oberhalb des Objektivkopfes D ist ein Revolverkopf E drehbar angeordnet, wobei dieser Objektivkopf D und der Revolverkopf E eine funktionelle Einheit, ein Optikmodul F bilden. Der Objektivkopf E enthält im wesentlichen einen Revolverhalter 22, auf dem sich drehbar in diesem Beispiel ein Tastlaserstrahldetektor 23, ein Scherungs-Interferometer-Okular 24 (shearing-interferometer) und ein Mikroskopokular 25 mit Fadenkreuz befinden. Dieses Mikroskopokular 25 ist aus Sicherheitsgründen mit einem Schreiblasersperrfilter 25' versehen.

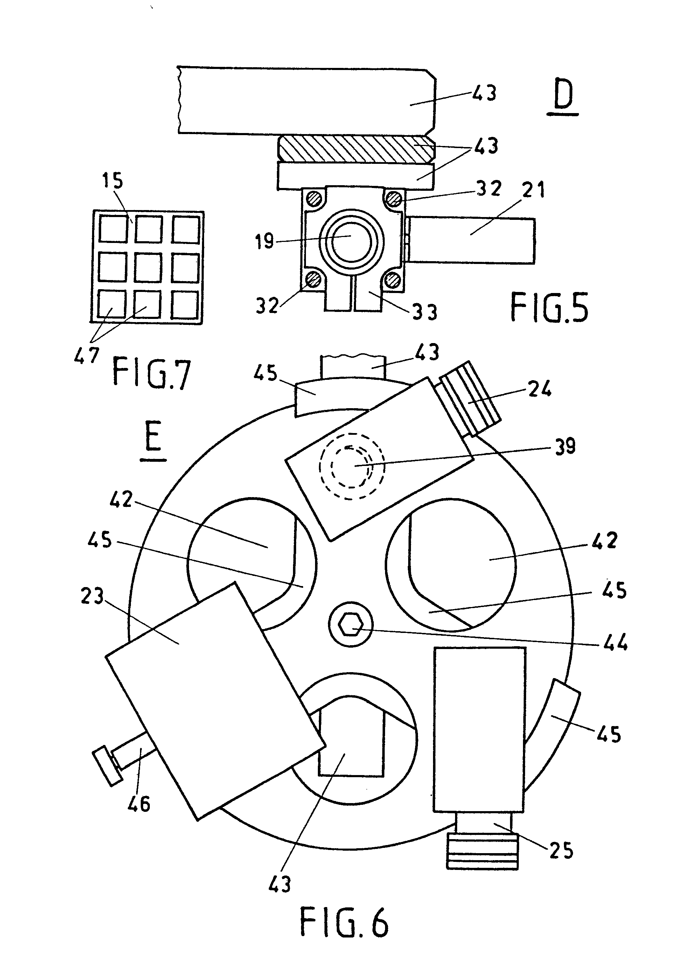

Der Laserstrahlensammler C, der Objektivkopf D und das Optikmodul F, das aus dem Objektivkopf D und dem Revolverkopf E besteht, werden in den nächsten Zeichnungen näher dargestellt und im Text ausführlicher beschrieben. In der Zeichnung 1b ist aus Übersichtlichkeitsgründen der Revolverkopf E in einer entwickelten, also geradlinigen Form gezeichnet. Die richtige kreisförmige Form wird später anhand der Fig. 6 sichtbar.

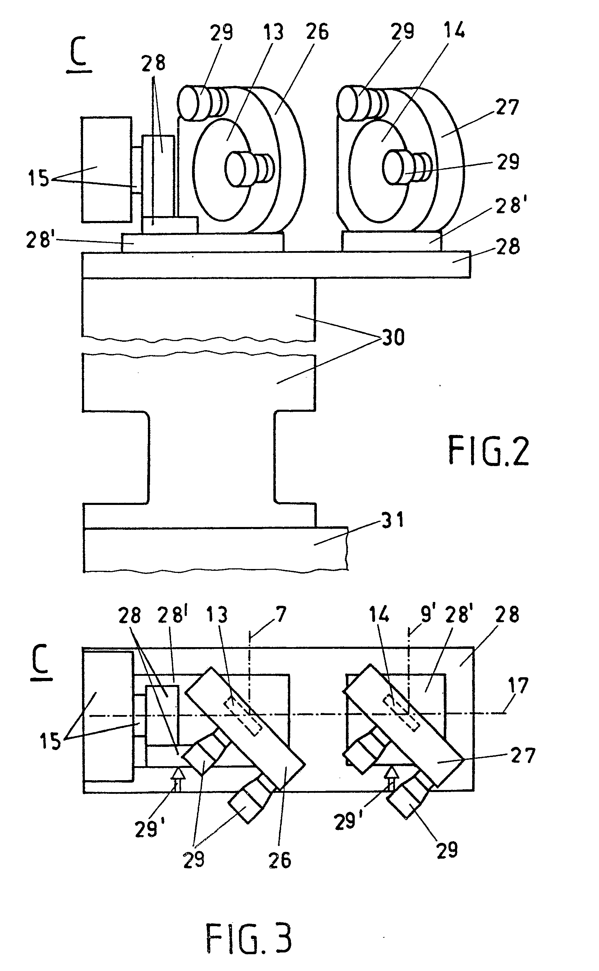

Die Fig. 2 zeigt in Vorderansicht den Laserstrahlensammler C. In einem Halter 26 ist der schon beschriebene Schreiblaserstrahlteiler 13 kardanisch aufgehängt. Auf ähnliche Weise ist in einem Halter 27 der ebenfalls schon erwähnte Tastlaserstrahlspiegel 14 angeordnet. Mehrere Tragelemente 28 des Laserstrahlensammlers C sind zwar für die Funktionsweise des Verfahrens und der Vorrichtung nicht wichtig, es ist jedoch selbstverständlich, dass sie ausreichend massiv hergestellt werden, was übrigens auch Führungsplatten 28' der Halter 26, 27 und einen Verbindungskörper 30 betrifft. Stellschrauben 29 dienen für die Einstellung der Halter 26, 27. Der massive Verbindungskörper 30 verbindet die Tragelemente 28 mit einem Arbeitstisch 31. Mit einem Tragelement 28 ist im linken Teil der Fig. 2 auch der schon erwähnte Schreiblaserstrahldetektor 15 befestigt.

In der Fig. 3 ist eine Draufsicht auf die konstruktive Ausbildung gemäss der Fig. 2 veranschaulicht. Die Bestandteile wurden schon vorher beschrieben. In der Fig. 3 sind zusätzlich noch die Stellschrauben 29' und Führungsplatten 28' gezeigt. Diese Stellschrauben 29 gemeinsam mit den Stellschrauben 29' ermöglichen die richtige Einstellung der Elemente 13, 14.

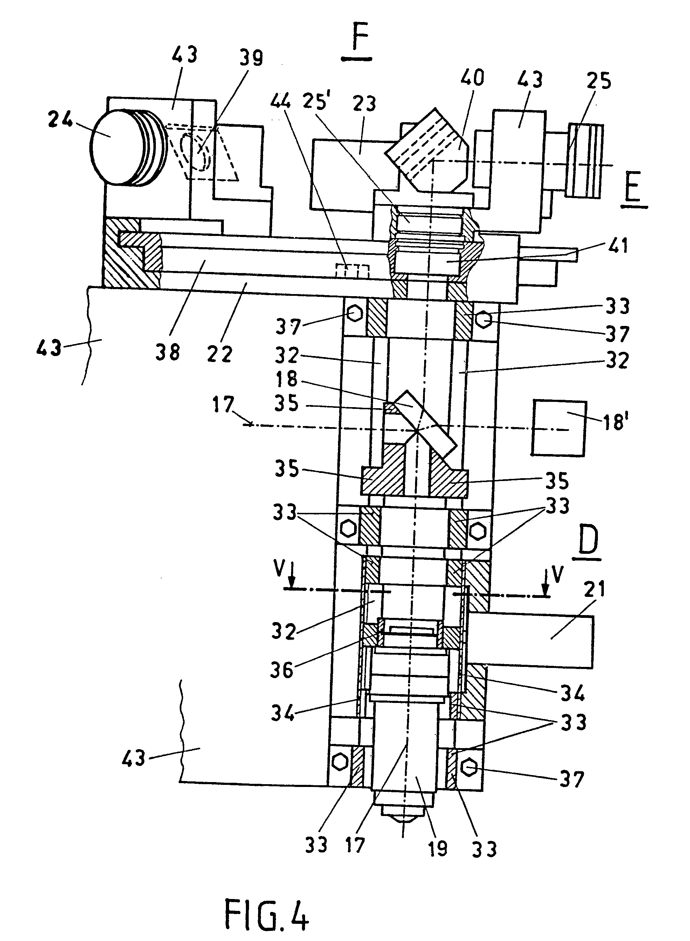

Gemäss Fig. 4 ist ein teilweiser vertikaler Schnitt durch das Optikmodul F gezeigt, das im unteren Teil aus dem Objektivkopf D und im oberen Teil aus dem Revolverkopf E besteht. Die Bestandteile des Objektivskopfes D werden im wesentlichen mit vier Stangen 32 gehalten, die parallel mit der optischen Achse durch den ganzen Objektivkopf D geführt werden und in Stangenhaltern 33 gelagert sind. Im unteren Teil des Objektivkopfes D ist die gegenseitige Lage von zwei Stangenhaltern 33 mittels zwei Blattfedern 34 fixiert. Der Tastlaserstrahlteiler 18 ist in einem Halter 35 gelagert.

Auf diesen Tastlaserstrahlteiler 18 kommen von links die auf derselben Achse geführten Schreib- und Tastlaserstrahlen, die in diesem gemeinsamen Strahlengang mit der Bezugsziffer 17 bezeichnet sind. Zur Halterung des Objektivs 19 dient unter anderem auch ein Objektivhaltering 36. Es ist selbstverständlich, dass die Bestandteile des Objektivkopfes D entlang der vier Stangen 32 verschoben werden können und so die optimale gegenseitige Lage der optischen Teile eingestellt werden kann. Dies betrifft selbstverständlich nur die Lage der Teile in der Richtung der optischen Achse. Für Bewegungen senkrecht zu der optischen Achse ist der piezoelektrische Antrieb 21 vorgesehen. Die Stangenhalter 33 und andere Befestigungselemente werden mit Schrauben 37 zusammengehalten, von welchen nur einige eingezeichnet sind, weil sie die Erfindungsidee nicht betreffen und Schraubenverbindungen selbstverständlich an sich bekannt sind. Mit dem oberen Teil des Objektivkopfes D ist ein Revolverkopfdrehtisch 38 drehbar verbunden. Für die ausreichend feste aber drehbare Fixierung dieses Revolverkopfdrehtisches 38 dient ein Revolverhalter 22, der mit einer Befestigungsschraube 44 in einem Träger 43 befestigt ist. Im Revolverkopf E sind in diesem Beispiel drei selbständige Elemente gelagert. Vor allem sollte man ein Prisma 40 erwähnen, mit welchem man die horizontale optische Achse in die vertikale Richtung bringen kann. Der Scherungs-Interferometer enthält ein Okular 24 mit einer Mattscheibe und eine Planplatte 39. Der Revolverkopf E enthält weiter das Mikroskopokular 25 mit einem Fadenkreuz und den Tastlaserstrahldetektor 23. Diese Bestandteile sind auf einem Revolverkopfdrehtisch 38 angeordnet, der in diesem Fall drei Bohrungen 42 aufweist. Diese Bohrungen 42 und eine anschaulichere Darstellung des Revolverkopfes E sind aus der folgenden Fig. 6 gut ersichtlich. In der vertikalen optischen Axe ist unter dem Prisma 40 ein Schreiblasersperrfilter 25′ und eine Tubuslinse 41 gelagert.

Die Fig. 5 zeigt den Schnitt V–V aus der Fig. 4. Es handelt sich also um den Schnitt durch den Objektivkopf D, wo auch die Befestigung dieses Objektivkopfes D gut sichtbar ist. Im oberen Teil der Fig. 5 ist der mehrteilige Träger 43 gezeigt, der eine dicke Platte enthält und zur Aufnahme der Befestigungsschraube 44 des Revolverkopfes E dient.

In der Fig. 6 ist eine vereinfachte Draufsicht auf den Revolverkopf E dargestellt. Diese Zeichnung veranschaulicht den Tastlaserstrahldetektor 23 mit einem Arretierstift 46 sowie das Scherungs-Interferometer-Okular 24 mit einer Planplatte 39 und das Mikroskopokular 25. Alle diese drei Teile sind mit einem Halter 45 drehbar befestigt, so dass man beliebig den gewünschten Apparat in die optische Achse des Objektivkopfes D bringen kann. In dieser Zeichnung ist auch der Träger 43 sichtbar, auf dem der Revolverkopf E befestigt ist.

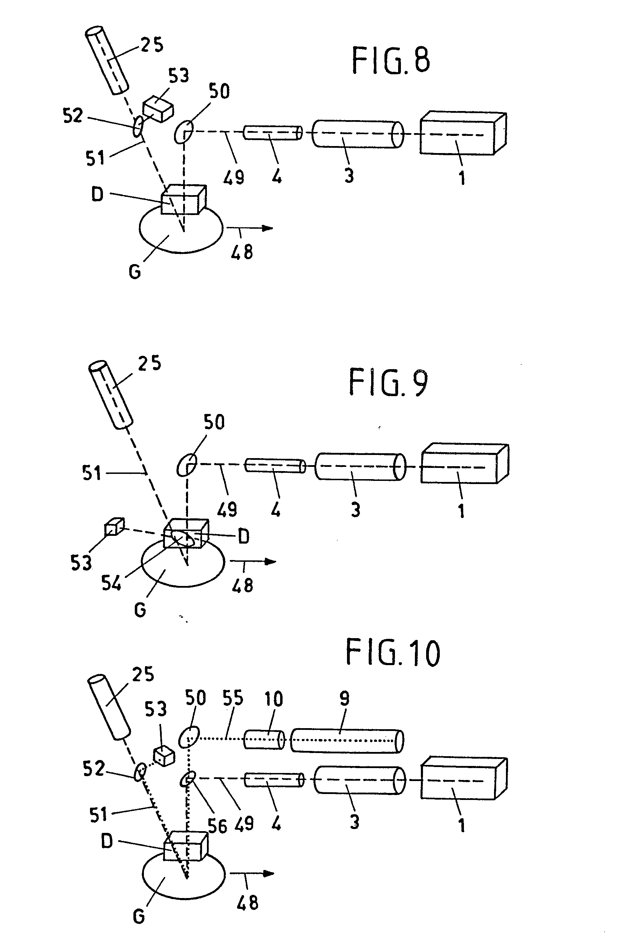

Die Fig. 7 zeigt vereinfacht ein Beispiel eines Detektors, in diesem Fall des Tastlaserstrahldetektors 23, der aus mehreren Feldern 47 zusammengesetzt ist. Bei einer richtigen Funktion wird das mittlere Feld bestrahlt, bei einer Abweichung von dieser gewünschten Lage werden ein oder mehrere Nebenfelder erfasst. Weil diese Felder 47 einzeln ausgewertet werden können, gibt dies die Information, in welcher Richtung sich die Abweichung von der richtigen Lage erstreckt.

In dieser beispielsweisen Ausführungsform wurde als das Schreiblasergerät 1 ein natürlich luftgekühltes Helium-Cadmium Lasersystem (Marke Liconix, Sunnyvale, CA 94086, USA) verwendet. Dieses Lasergerät besteht aus einem stromgeregelten Hochspannungsspeisegerät Liconix, Modell 4200 PS, mit Kalt- und Warmstart, mit Zeitprogramm und Zündsteuerung, sowie aus einem Lasergerät Modell 4110B. Die Hauptmerkmale des Schreiblasergerätes 1 sind folgende: Lichtwellenlänge 442 nm, Lichtleistung ist 10 mW (Dauerlicht), die Intensität ist normal über den Strahldurchmesser verteilt, Polarisations-Richtung ist horizontal ±5%, Strahldurchmesser 1,1 mm.

Das Tastlasergerät 9 ist ein natürlich luftgekühltes Melles Griot, (ILEE AG, CH-Schlieren) Helium-Neon-Lasersystem, bestehend aus Lasergerät, Modell 05-LHP-111 und Modell 05-LPN-340 Speisegerät (1800 V, 6,5 mA). Die Lichtwellenlänge beträgt 633 nm, Lichtleistung ist 1 mW, Abweichung der Strahlachse nach dem Kaltstart ist < 200 µRad, nach 15 Min. Betrieb 30 µRad. Die Strahl-Divergenz ist < 1,3 mRad, Regelabweichung der Lichtleistung ist < ±5%.

Der Modulator 3 ist ein natürlich luftgekühltes, elektrisch gesteuertes Coherent-Blaulaserlicht-Unterbrecher-System (Coherent Associates, Danbury, Conn. 06810, USA), bestehend aus dem Steuergerät Modell 31 und dem Modulator Modell 3010. Das Modulator-Rohr enthält einen bruchempfindlichen, in Flüssigkeit mit gleicher Brechungszahl eingebettetem Kaliumdihydrogenphosphat-Kristall mit zwei Steuerelektroden und einem am Ausgang angebauten Fotodioden Lichtmesser. Der Kristall wirkt als Polarisationsfilter, dessen Richtungswinkel mit einer Spannung von ca. 600 V über 90 Grad gedreht werden kann.

Der Aufweiter 4 besteht aus zwei Sammellinsen und einer Lochblende, die auch «pinhole» genannt wird, mit einem Durchmesser von 10 µm, im gemeinsamen Brennpunkt der Sammellinsen. Der Aufweiter vergrössert den Durchmesser und verkleinert die Divergenz des Laserstrahls im Aufweitungsverhältnis, das ist das Verhältnis der Brennpunktabstände, und überträgt das Bild des Lichtpunktes in der Lochblende im Ausgangsstrahl, d.h. entfernt z.B. wegen Staub entstandene dunkle Punkte des ankommenden Laserstrahls und macht die Richtung des Ausgangsstrahls unabhängig von der Richtung des Eingangsstrahls.

Als Teiler 13 wird ein dichroitischer Teiler verwendet, der aus einer planparallelen Glasplatte mit einseitig aufgedampfter dielektrischer Metallschicht besteht. Dieser lässt das Licht der bestimmten Wellenlänge, d.h. der einen Farbe, das in der Durchgangsrichtung eintrifft, in der gleichen Richtung durch, versetzt dabei den Strahlungsaustrittspunkt abhängig von der Brechungszahl des Glases für die bestimmte Wellenlänge in Abhängigkeit von der Dicke des Glases.

Der an sich bekannte piezoelektrische Antrieb 21 besteht in diesem Beispiel aus Burley, Modell PZ70, 100 V Speisegerät und einem Burley, Modell PZ40 Piezotranslator. Der Piezokristallstapel dehnt sich in etwa proportional mit der angelegten Spannung aus und verschiebt dadurch das Objektiv 19 in der horizontalen Achse.

Ein Mikroskop besteht aus dem Objektiv 19 und dem Mikroskopokular 25. Das Objektiv 19 weist ein Sammellinsensystem mit oder ohne Standard-Deckglas auf der Arbeitsseite auf, fokussiert den konzentrisch und parallel eintretenden blauen und roten Laserstrahl zum kleinstmöglichen Brennfleck im Arbeitsabstand, leitet ein vergrössertes Luftbild des konzentrisch zum Brennfleck liegenden grün beleuchteten Bildfeldes ab, das mit dem Mikroskopokular 25 betrachtet werden kann. Es setzt die mechanische Verschiebung durch den piezoelektrischen Antrieb 21 in eine Verschiebung des Bild- und Brennfleck-Mittelpunktes um.

Das Mikroskopokular 25 ist als ein Sammellinsensystem mit der Funktion einer Lupe ausgebildet und leitet aus dem Luftbild des Objektivs 19 ein vergrössertes sichtbares Bild ab.

Der Scherungs-Interferometer besteht aus einem in den Strahlengang einschiebbaren Spiegel, einer planparallelen Glasplatte 39 und einem Okular 24, bildet ein Scherungs-Interferometer zum Messen der Abweichung des Abstandes der reflektierenden Aluminium-Fläche von der Fokussierebene des Objektivs 19.

Die Detektoren 15, 18' und 23 bestehen zweckmässig aus je einer zentralen, inneren unempfindlicheren und einer äusseren empfindlicheren Anordnung von Silizium-Photodioden. Sie leiten aus dem vom Werkstück reflektierten oder auf eine andere Weise gewonnenen Laserstrahl die Feststellung ab, ob sich der zuständige Laserstrahl in der richtigen Lage befindet oder in einer bestimmten Richtung sich von dieser Lage entfernt.

Die Figuren 8 bis 13 zeigen in schematischer Darstellung einige mögliche Varianten des Erfindungsgegenstandes.

Fig. 8 zeigt ein vereinfachtes Funktionsschema der erfindungsgemässen Vorrichtung mit einzigem Lasergerät 1. Ein Werkstück 9 ist aus einer Siliziumplatte hergestellt und mit einem metallischen Raster versehen, der erst in den nächsten Zeichnungen gezeigt wird. Ein Pfeil 48 zeigt die Bewegungsrichtung des Werkstückes G. Mit der Ziffer 49 ist ein Schreiblaserstrahl bezeichnet, der aus einem Schreiblaser 1 durch einen Modulator 3 und einen Aufweiter 4 auf einen Umlenkspiegel 50 fällt. Dieser Schreiblaserstrahl 49 entspricht dem Schreiblaserstrahl 7, ist jedoch wegen der Übersichtlichkeit gestrichelt gezeichnet. Der Schreiblaserstrahl 49 wird dann durch den Objektivkopf D mit einem Objektiv auf das bearbeitete Werkstück G geführt. Das vom Werkstück G reflektierte Licht 51 fällt auf einen Strahlteiler 52. Von diesem wird ein Teil des Lichtes in einen Detektor 53 geleitet und durch den Strahlteiler 52 geht ein Teil des reflektierten Lichtes in ein Mikroskopokular 25.

Fig. 9 entspricht im wesentlichen der Fig. 8 mit dem Unterschied, dass in dem Objektiv D ein polarisierender Strahlteiler 54 angeordnet ist, der eine Polarisationsrichtung des reflektierten Lichtes in den Detektor 53 leitet.

Fig. 10 zeigt eine Lösung, wo zusätzlich noch ein Tastlaserstrahl 55 Verwendung findet. Dieser Tastlaserstrahl 55 entspricht dem Tastlaserstrahl 9' im ersten Beispiel, ist jedoch wegen der Übersichtlichkeit punktiert gezeichnet, so dass aus den Zeichnungen die Funktion der Laserstrahlen ersichtlich ist. Diese Lösung ist dann zweckmässig, wenn die Beschaffenheit der Oberfläche des Werkstückes G zwei verschiedene Wellenlängen braucht. Der Tastlaserstrahl 55 wird in einem Tastlasergerät 9 erzeugt und weiter durch einen Aufweiter 10 auf einen Umlenkspiegel 50 geführt. Von diesem Umlenkspiegel 50 reflektiert der Tastlaserstrahl 55 durch den dichroitischen Strahlteiler 56 und durch den Objektivkopf D gemeinsam mit dem Schreiblaserstrahl 49 auf die Oberfläche des Werkstückes G. Beide Laserstrahlen gehen auf das Werkstück G in derselben Linie und auch in derselben Linie kontaktieren sie den Strahlteiler 52. Der Tastlaserstrahl 55 wird von diesem Strahlteiler 52 in den Detektor 53 reflektiert. Der reflektierte Schreiblaserstrahl 51 tritt in das Mikroskopokular 25 ein.

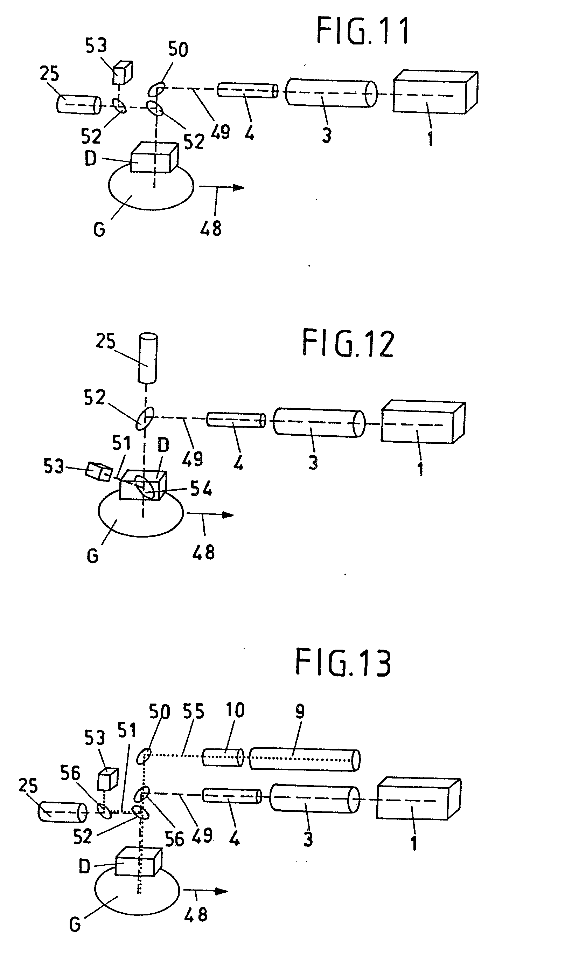

Gemäss Fig. 11 ist der Strahlteiler 52 vor dem Objektiv D angeordnet und der reflektierte Schreiblaserstrahl 49 wird dann mit Hilfe eines weiteren Strahlteilers 52 in den Detektor 53 und in das Mikroskopokular 25 geleitet.

Bei der Ausführungsform gemäss Fig. 12 wird direkt in den Objektivkopf D ein polarisierender Strahlteiler 54 angeordnet, der eine Polarisationsrichtung des reflektierten Lichtes 51 in den Strahlendetektor 53 leitet, wobei das Mikroskopokular 25 das reflektierte Licht direkt vom Strahlteiler 52 erhält.

Gemäss Fig. 13 werden wieder sowohl der Schreiblaserstrahl 49 als auch der Tastlaserstrahl 55 verwendet; sie werden senkrecht zu dem Werkstück G geleitet. In dem gemeinsamen Weg beider Laserstrahlen ist ein Strahlteiler 52 angeordnet, der wie in der Fig. 12 gleichzeitig einen Teil des Lichtes in den Detektor 53 und einen Teil des Lichtes in das Mikroskopokular 25 leitet.

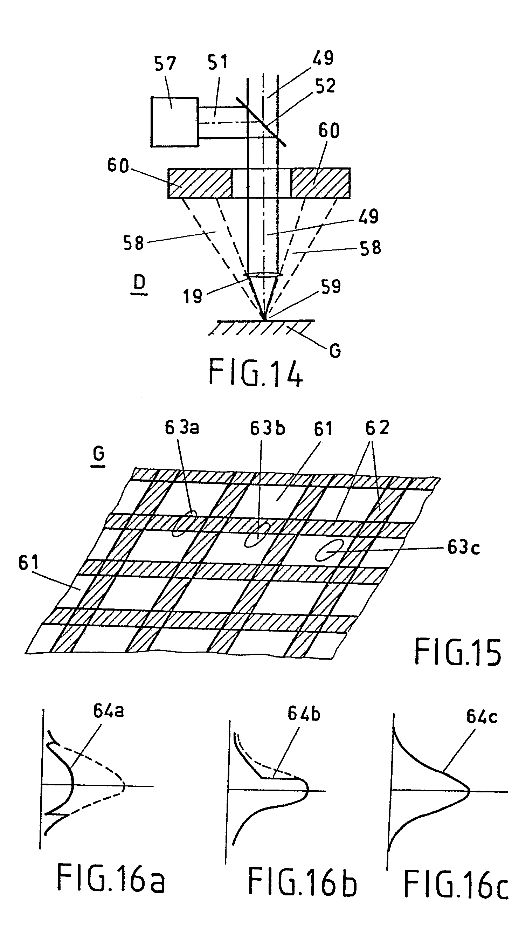

Fig. 14 zeigt eine Variante, bei der sowohl das reflektierte Licht 51 als auch das diffuse Licht 58 detektiert werden. Für die Detektion des reflektierten Lichtes 51 dient ein Detektor 57, für die Detektion des diffusen Lichtes 58 ein Detektor 60. Wie aus der Fig. 14 gut sichtbar ist, liegt der Detektor 60 des diffusen Lichtes 58 um den Laserstrahl 49 herum angeordnet.

Fig. 15 zeigt sehr vereinfacht einen Teil des Werkstückes G. Mit 61 sind die Flächen mit integriertem Schaltkreis bezeichnet, wobei ein metallisierter Raster 62 als eine Referenzstruktur dient. Ein Laserfleck 63a liegt direkt auf dem metallisierten Raster 62, der zweite Laserfleck 63b teilweise auf dem metallisierten Raster 62 und der dritte Laserfleck 63c direkt auf der integrierten Schaltung 61.

Die entsprechenden reflektierten Intensitätsverteilungen werden in den Fig. 16a bis 16c gezeigt. In der Fig. 16a ist der ideale Verlauf der Intensitätsverteilung gestrichelt gezeichnet, der tatsächliche Verlauf mit dem vollen Strich 64a. Ähnlich ist das in der Fig. 16b, wo eine Abweichung der Kurve 64b von dem idealen Zustand gezeigt ist. Die Fig. 17c zeigt den idealen Zustand, das bedeutet, dass der wirkliche Verlauf der Intensitätsverteilung 64c mit dem idealen Verlauf identisch ist.

Der metallisierte Raster 62 dient in der erfindungsgemässen Vorrichtung als Referenzstruktur. Der Abstand zweier Rasterstreifen ist z.B. 7 μm und ihre Breite 5 μm (Fig. 15). Das Schreiblasergerät 1 ist in den letztgenannten Beispielen z.B. ein Argonionenlaser von 1 bis 5 mW Leistung bei 458 nm Wellenlänge (z.B. Spectra Physics, Mountain View, California, Mod. 162A.07; American Laser Corp., Salt Lake City, Utah, Mod. 60C), oder ein He-Cd-Laser von 7 bis 40 mW Leistung bei 442 nm, oder 1 bis 10 mW bei 325 nm (z.B. Liconix, Sunnyvale, California, Mod. 4200 N oder Mod. 4200 NB).

Auch das Schalten der kontinuierlichen Laserleistung wird mit einem elektrooptischen Modulator–Strahlschalter 3 (z.B. Coherent Inc., Palo Alto, California, Modulator Div. Mod. 3010) oder einem akustooptischen Modulator–Strahlschalter (z.B. Coherent Modulator Div. Mod. 304D) durchgeführt. Die benötigte Schaltzeit ergibt sich aus der Schreibgeschwindigkeit und der örtlichen Auflösung und ist z.B. 2 us. Der nachfolgende Strahlaufweiter 4 erhöht den Strahldurchmesser z.B. auf das Zehnfache. Der horizontale Schreibstrahl 49 wird in vertikaler Richtung umgelenkt mit dem Umlenkspiegel 50. Das Objektiv 19 besitzt in diesem Beispiel eine Brennweite von 18 mm und einen Durchmesser von 10 mm. Die resultierende Fleckgrösse ist etwa 2 µm und die Schärfentiefe ist etwa 13 µm. Der Umlenkspiegel 50 kann steuerbar oder justierbar angeordnet sein.

Das Tastlasergerät 9 ist in diesem Beispiel ein He-Ne Laser von 1 mW Leistung und 0,65 mm Strahldurchmesser. Dieser wird mit einem Aufweiter 10 auf das 4-fache vergrössert und mit einem justierbaren Umlenkspiegel 50 dem Schreiblaserstrahl 49 überlagert.

Die Funktionsweise des Erfindungsgegenstandes wurde teilweise schon in vorigen Teilen beschrieben. Es bestehen mehrere Varianten. Bei der Lösung gemäss Fig. 8 wird das Abtasten und das Schreiben mit demselben Laserstrahl 49 durchgeführt. Gemäss der Fig. 9 wird der Schreiblaserstrahl 49 durch einen polarisierenden Strahlteiler 54 auf die Oberfläche des Werkstückes G geschickt, wobei der Strahlteiler 54 in diesem Fall als Analysator des elektrooptischen Modulators 3 dient. Der Detektor 53 erhält also bei offenem oder geschlossenem Strahlschalter dieselbe Leistung. Die Fig. 10 zeigt separate Abtast- und Schreiblaserstrahlen 49, 55, die jedoch auf dieselbe Achse gebracht werden und zwar mit Hilfe von dichroitischem Spiegel 56. Dieser Spiegel weist den Vorteil auf, dass er für eine Wellenlänge 100% Transmission und für eine andere Wellenlänge 100% Reflexion hat. Diese Lösung ermöglicht auch beide Laserstrahlen 49, 55 mit demselben Objektiv zu fokussieren. Die Varianten gemäss den Fig. 11 bis 13 sind insbesondere für Werkstücke mit hohem Relief geeignet.

## Patentansprüche

1. Verfahren zum Feststellen von Referenzdaten zur Positionsbestimmung und zur Korrektur von mechanischen Bewegungen beim Schreiben von Linien mit einem Schreiblaserstrahl (7, 49) in einem Werkstück (G) mit einem metallisierten, dreidimensionalen, integrierten Schaltkreis (61), wobei der metallisierte Raster (62) des Werkstückes (G) während der linienartigen Arbeitsbewegungen mit dem mittels eines Modulators (3) modulierten abgeschwächten oder nicht abgeschwächten Schreiblaserstrahl (7, 49) oder einem auf dieselbe Achse gebrachten Tastlaserstrahl (9', 55) abgetastet wird, der vom Werkstück (G) reflektierte Laserstrahl (51) in wenigstens einem Strahlendetektor (23, 52, 57 oder 60) der aus mehreren Feldern besteht empfangen und danach ausgewertet wird, wobei die ausgewerteten Signale zur Positionsbestimmung und zur Korrektur der Relativbewegung des Werkstücks (D) und des Schreiblaserstrahls (7, 49) verwendet werden.

2. Verfahren nach Anspruch 1, dadurch gekennzeichnet, dass der oder die Laserstrahlen (7, 9', 49, 55) senkrecht oder mit einer Abweichung bis ±10° auf die bearbeitete Fläche des integrierten Schaltkreises (57) des Werkstückes (G) gesendet werden.

3. Verfahren nach Anspruch 1, dadurch gekennzeichnet, dass die Korrektur der von der Linie abweichenden Bewegung des Werkstücks (G) mit einem steuerbaren Strahlablenker, z.B. mit steuerbarem Umlenkspiegel (50) vor dem Objektiv und/oder mit steuerbarer schräggestellter Planplatte nach dem Objektiv (19) und/oder mit steuerbarer Verschiebung des Objektives (19) durchgeführt wird.

4. Verfahren nach Anspruch 1, dadurch gekennzeichnet, dass ein Modulationssignal des Schreiblaserstrahls (7, 49) den Verstärkungsfaktor eines Signalverstärkers direkt steuert, so dass auch bei unterschiedlicher Strahlleistung gleiche Ausgangssignale erreicht werden.

5. Verfahren nach Anspruch 1, dadurch gekennzeichnet, dass der polarisierte Schreiblaserstrahl (49) durch einen polarisierenden Strahlteiler (54) als Analysator des elektrooptischen Modulators (3) auf die bearbeitete Fläche des Werkstücks (G) gestrahlt wird, so dass der Strahlendetektor (53) in beiden Zuständen des Strahlschalters dieselbe Leistung erhält.

6. Verfahren nach Anspruch 1, dadurch gekennzeichnet, dass zusätzlich zum Schreiblaserstrahl (7, 49) ein Tastlaserstrahl (9', 55) verwendet wird, welcher mit einem dichroitischen Strahlteiler (56) auf dieselbe Achse gebracht wird und denselben Strahlengang (17) durchläuft wie der Schreiblaserstrahl (7, 49), dass somit für die Wellenlänge des Schreiblaserstrahls (7, 49) ungünstige Oberflächenzustände der integrierten Schaltung des Werkstückes (G) ausgeglichen werden und dass die Wellenlänge des Tastlaserstrahls (9', 55) von derjenigen des Schreiblaserstrahls (7, 49) unterschiedlich gewählt wird.

7. Verfahren nach Anspruch 1, dadurch gekennzeichnet, dass neben dem Signal des reflektierten Laserstrahls (49) das diffuse Licht (58) mit einem zusätzlichen Detektor (60) gemessen und das Verhältnis der beiden Signale gebildet wird und dass die unterschiedliche lokale Oberflächenbeschaffenheit der integrierten Schaltungen des Werkstückes (G), wie Reflektions- und Streuverhalten der metallisierten Oberfläche und der darunterliegenden Materialien, kompensiert werden.

8. Verfahren nach Anspruch 1 und 6, dadurch gekennzeichnet, dass der Schreiblaserstrahl (7) und der Tastlaserstrahl (9') in einem Laserstrahlensammler (C) mit einem Schreiblaserstrahlteiler (13) und einem Tastlaserstrahlspiegel (14) in einen Objektivkopf (D) reflektiert werden und dass ein Teil des Schreiblaserstrahls (7) mit dem Schreiblaserstrahlteiler (13) in einen Schreiblaserstrahldetektor (15) abgezweigt wird.

9. Verfahren nach Anspruch 8, dadurch gekennzeichnet, dass der Schreiblaserstrahl (7) und der Tastlaserstrahl (9') im Laserstrahlensammler (C) auf derselben Achse auf einen Tastlaserstrahlteiler (18) des Objektivkopfes (D) geführt werden, von dem der Tastlaserstrahl (9') und der Schreiblaserstrahl (7) durch das Objektiv (19) auf das Werkstück (G) geführt werden, und dass ein Teil des reflektierten Tastlaserstrahls (9') durch den Tastlaserstrahlteiler (18) in einen Revolverkopf (E) reflektiert wird.

10. Verfahren nach den Ansprüchen 8 und 9, dadurch gekennzeichnet, dass die in Detektoren (15, 18', 23) und/oder aus dem Objektivkopf (D) und/oder aus dem Revolverkopf (E) festgestellten Laserlicht-Signale ausgewertet werden und dass die richtige Funktionslage erreicht oder erfasst wird.

11. Vorrichtung zur Durchführung des Verfahrens nach Anspruch 1, dadurch gekennzeichnet, dass ein Schreiblasergerät (1) für die Erzeugung eines Schreiblaserstrahls (7, 49) mit nachgeschaltetem Modulator (3), einen Aufweiter (5) und ein Objektiv (19) enthält und für die Auswertung der empfangenen Signale ein Strahlteiler (52) des vom Werkstück reflektierten Lichtes (51) einem Detektor (53) mit mehreren Feldern zugeordnet ist.

12. Vorrichtung nach Anspruch 11, dadurch gekennzeichnet, dass der Strahlteiler ein polarisierender Strahlteiler (54) ist, welcher als Analysator des elektrooptischen Modulators (3) vorgesehen ist.

13. Vorrichtung nach Anspruch 11, dadurch gekennzeichnet, dass die Laserschreibvorrichtung zusätzlich ein Tastlasergerät (9) mit einer vom Schreiblasergerät (1) unterschiedlichen Wellenlänge enthält und dass sie mit einem dichroitischen Strahlteiler (56) zum Überlagern des Tastlaserstrahls (55) auf dieselbe Achse wie der Schreiblaserstrahl (49) und zum nachträglichen Separieren des Tastlaserstrahls (55) auf einem Detektor (53) versehen ist.

14. Vorrichtung nach Anspruch 11, dadurch gekennzeichnet, dass eine Steuervorrichtung zum Erreichen der richtigen gegenseitigen Lage des integrierten Schaltkreises (57) und der Laserstrahlung ein Regelkreis enthält, welcher aus einem Operationsverstärker mit nachgeschaltetem Hochspannungsverstärker und mindestens einem piezoelektrischen Antrieb (21) besteht.

15. Vorrichtung zur Durchführung des Verfahrens nach den Ansprüchen 8 bis 10, dadurch gekennzeichnet, dass der Objektivkopf (D) mit dem Revolverkopf (E) zum Empfang der Laserstrahlen (7, 9') ein gemeinsames Optikmodul (F) bilden, dessen optischer Verbindungsteil nur der Tastlaserstrahlteiler (18) ist.

16. Vorrichtung nach Anspruch 15, dadurch gekennzeichnet, dass der Laserstrahlensammler (C) mit einem Schreiblaserstrahldetektor (15) versehen ist.

17. Vorrichtung nach Anspruch 15, dadurch gekennzeichnet, dass der Revolverkopf (E) mit wenigstens zwei der drei Einheiten: Tastlaserstrahldetektor (23), Scherungs-Interferometer-Okular (24) und Mikroskopokular (25) mit Fadenkreuz, versehen ist.

18. Vorrichtung nach Anspruch 15, dadurch gekennzeichnet, dass die Schreiblaserstrahlquelle (A) und/oder die Tastlaserstrahlquelle (B) mit je wenigstens einer Lochblende (2', 11) innerhalb des Aufweiters (4, 10) versehen ist.

19. Vorrichtung nach Anspruch 17, dadurch gekennzeichnet, dass das Mikroskopokular (25) des Objektivkopfes (E) mit einem Schreiblasersperrfilter (25') versehen ist.

20. Vorrichtung nach Anspruch 15, dadurch gekennzeichnet, dass in Richtung der auf derselben Achse geführten Schreib- und Tastlaserstrahlen (17) hinter dem Tastlaserstrahlteiler (18) ein Detektor (18') angeordnet ist.

**Revendications**

1. Procédé pour l'établissement de données de référence pour la détermination de positions et pour la correction de mouvements lors de l'écriture de lignes avec un faisceau laser d'écriture (7, 49) dans une pièce à usiner (G) avec un circuit intégré métallisé et tridimensionnel (61), la trame métallisée (62) de la pièce à usiner (G) étant explorée, pendant les mouvements de travail linéaires, par le faisceau laser d'écriture (7, 49) modulé, affaibli ou non affaibli au moyen d'un modulateur (3), ou par un faisceau laser d'exploration (9', 55) amené sur le même axe, le faisceau laser (51) réfléchi par la pièce à usiner (G) étant reçu, puis analysé dans au moins un détecteur de rayonnement (23, 52, 57 ou 60) composé de plusieurs champs, les signaux analysés étant utilisés pour la détermination de la position et pour la correction du mouvement relatif de la pièce à usiner (G) et du faisceau laser d'écriture (7, 49).

2. Procédé selon la revendication 1, caractérisé en ce que le ou les faisceau(x) laser(s) (7, 9', 49, 55) est (sont) dirigé(s) perpendiculairement ou avec un écart allant jusqu'à ±10° sur la surface traitée du circuit intégré (57) de la pièce à usiner (G).

3. Procédé selon la revendication 1, caractérisé en ce que la correction du mouvement de la pièce à usiner (G) s'écartant de la ligne est effectuée avec un dispositif de balayage réglable, par exemple au moyen d'un miroir de déviation (50) réglable placé devant l'objectif et/ou d'une plaque plane inclinée réglable disposée derrière l'objectif (19) et/ou d'un déplacement commandé de l'objectif (19).

4. Procédé selon la revendication 1, caractérisé en ce qu'un signal de modulation du faisceau laser d'écriture (7, 49) commande directement le gain d'un amplificateur de signaux de façon à obtenir des signaux de sortie identiques même pour une puissance rayonnée variable.

5. Procédé selon la revendication 1, caractérisé en ce que le faisceau laser d'écriture polarisé (49) parvient, à travers une lame séparatrice polarisante (54) comme analyseur du modulateur électro-optique (3) sur la surface traitée de la pièce à usiner (G) de sorte que le détecteur de rayonnement (53) reçoit la même puissance pour les deux états du commutateur de faisceau.

6. Procédé selon la revendication 1, caractérisé en ce que, en plus du faisceau laser d'écriture (7, 49), est utilisé un faisceau laser d'exploration (9', 55) qui est amené sur le même axe au moyen d'une lame séparatrice dichroïque (56) et suit la même marche des rayons (17) que le faisceau laser d'écriture (7, 49); que des états de surface du circuit intégré de la pièce à usiner (G) défavorables pour la longueur d'onde du faisceau laser d'écriture (7, 49) sont ainsi compensés; et que la longueur d'onde choisie pour le faisceau laser d'exploration (9', 55) diffère de celle du faisceau laser d'écriture (7, 49).

7. Procédé selon la revendication 1, caractérisé en ce que, en plus du signal du faisceau laser réfléchi (49), la lumière diffusée (58) est mesurée avec un détecteur supplémentaire (60), que le rapport des deux signaux est établi et que les différences locales de l'état de surface des circuits intégrés de la pièce à usiner (G) telles que le comportement de réflexion et de dispersion de la surface métallisée et des matériaux sous-jacents sont compensées.

8. Procédé selon les revendications 1 et 6, caractérisé en ce que le faisceau laser d'écriture (7) et le faisceau laser d'exploration (9') sont réfléchis dans un collecteur de faisceaux lasers (C), avec une lame séparatrice de faisceau laser d'écriture (13) et un miroir de faisceau laser d'exploration (14), dans une tête porte-objectif (D); et qu'une partie du faisceau laser d'écriture (7) est déviée par la lame séparatrice de faisceau laser d'écriture (13) dans un détecteur de faisceau laser d'écriture (15).

9. Procédé selon la revendication 8, caractérisé en ce que le faisceau laser d'écriture (7) et le faisceau laser d'exploration (9') sont dirigés, dans le collecteur de faisceaux lasers (C), sur le même axe vers une lame séparatrice de faisceau laser d'exploration (18) de la tête porteobjectif (D) à partir de laquelle le faisceau laser d'exploration (9') et le faisceau laser d'écriture (7) sont envoyés, au travers de l'objectif (19), sur la pièce à usiner (G); et que une partie du faisceau laser d'exploration réfléchi (9') est réfléchie par la lame séparatrice de faisceau laser d'exploration (18) dans une tête revolver (E).

10. Procédé selon les revendications 8 et 9, caractérisé en ce que les signaux de lumière laser reçus par les détecteurs (15, 18', 23) et/ou provenant de la tête porte-objectif (D) et/ou de la tête revolver (E) sont analysés et que la position de fonctionnement correcte est atteinte ou déterminée.

11. Dispositif pour la mise en œuvre du procédé selon la revendication 1, caractérisé en ce qu'un laser d'écriture (1) pour la génération d'un faisceau laser d'écriture (7, 49) suivi d'un modulateur (3) comprend un élargisseur (4) et un objectif (19) et que, pour l'analyse des signaux reçus, un diviseur de rayons (52) de la lumière réfléchie (51) par la pièce à usiner est associé à un détecteur (53) à plusieurs champs.

12. Dispositif selon la revendication 11, caractérisé en ce que le diviseur de rayons est une lame séparatrice polarisante (54) qui est prévue comme analyseur du modulateur électro-optique (3).

13. Dispositif selon la revendication 11, caractérisé en ce que le laser d'écriture comprend, en plus, un laser d'exploration (9) avec une longueur d'onde qui diffère de celle du laser d'écriture (1); et qu'il est muni d'une lame séparatrice dichroïque (56) pour la superposition du faisceau laser d'exploration (55) sur l'axe du faisceau laser d'écriture (49) et pour la séparation ultérieure du faisceau laser d'exploration (55) sur un détecteur (53).

14. Dispositif selon la revendication 11, caractérisé en ce qu'un dispositif de commande comprend, pour le positionnement relatif correct du circuit intégré (57) et du faisceau laser, un circuit de réglage qui se compose d'un amplificateur opérationnel suivi d'un amplificateur de haute tension et d'au moins un mécanisme d'entraînement piézoélectrique (21).

15. Dispositif pour la mise en œuvre du procédé selon les revendications 8 à 10, caractérisé en ce que la tête porte-objectif (D) forme avec la tête revolver (E) pour le réception des faisceaux lasers (7, 9') un module optique commun (F) dont la liaison optique n'est réalisée que par la lame séparatrice de faisceau laser d'exploration (18).

16. Dispositif selon la revendication 15, caractérisé en ce que le collecteur de faisceaux lasers est muni d'un détecteur de faisceau laser d'écriture (15).

17. Dispositif selon la revendication 15, caractérisé en ce que la tête revolver (E) comprend au moins deux des trois unités suivantes: détecteur de faisceau laser d'exploration (23), oculaire d'interféromètre à dédoublement (24) et oculaire de microscope (25) avec réticule.

18. Dispositif selon la revendication 15, caractérisé en ce que la source de faisceau laser d'écriture (A) et/ou la source de faisceau laser d'exploration (B) sont équipées chacune d'au moins un sténopé (2', 11) à l'intérieur de l'élargisseur (4, 10).

19. Dispositif selon la revendication 17, caractérisé en ce que l'oculaire de microscope (25) de la tête porte-objectif (D) est muni d'un filtre d'arrêt de faisceau laser d'écriture (25').

20. Dispositif selon la revendication 15, caractérisé en ce qu'un détecteur (18') est disposé derrière la lame séparatrice de faisceau laser d'exploration (18), vu dans le sens des faisceaux lasers d'écriture et d'exploration (17) guidés sur le même axe.

**Claims**

1. Process for ascertaining reference data for purposes of determining position and for the correction of mechanical movements in the recording of lines with a recording laser beam (7, 49) in a workpiece (G) with a metallised three-dimensional integrated switching circuit (61), wherein the metallised screen (62) of the workpiece (G) is scanned, during the linear working movements, with the recording laser beam (7, 49) which is weakened or is not weakened and which is modulated by means of a modulator (3), or with a scanning laser beam (9', 55) which is brought onto the same axis; the laser beam (51) which is reflected from the workpiece (G) being received and afterwards evaluated in at least one beam detector (23, 52, 57 or 60) which consists of several fields; the evaluated signals being used for determining position and for correcting the relative movement of the workpiece (D) and of the recording laser beam (7, 49).

2. Process according to claim 1, characterised in that the laser beam or beams (7, 9', 49, 55) are transmitted vertically, or with a deflection of up to ±10°, onto the surface that is being processed, of the integrated switching circuit (57) of the workpiece (G).

3. Process according to claim 1, characterised in that the correction of the movement of the workpiece (G) deviating from the line is performed with a controllable beam deflector, e.g. with controllable deflecting mirror (50) in front of the lens and/or with controllable slopingly-arranged plane plate after the lens (19) and/or with controllable displacement of the lens (19).

4. Process according to claim 1, characterised in that a modulation signal of the recording laser beam (7, 49) directly controls the amplification factor of a signal amplifier, so that equal output signals are obtained even when there is different beam output.

5. Process according to claim 1, characterised in that the polarised recording laser beam (49) is radiated through a polarising beam splitter (54), as analyser of the electro-optical modulator (3), onto the surface that is being processed of the workpiece (G), so that the beam detector (53) receives the same output in both conditions of the beam switch.

6. Process according to claim 1, characterised in that in addition to the recording laser beam (7, 49), a scanning laser beam (9', 55) is used, which is brought onto the same axis with a dichroic beam splitter (56) and travels the same beam path (17) as the recording laser beam (7, 49), and in that thus, for the wavelength of the recording laser beam (7, 49), unfavourable surface conditions of the integrated circuit of the workpiece (G) are compensated, and in that the wavelength of the scanning laser beam (9', 55) is selected so as to be different from that of the recording laser beam (7, 49).

7. Process according to claim 1, characterised in that as well as the signal of the reflected laser beam (49), the diffused light (58) is also measured with an additional detector (60), and the ratio of the two signals is formed, and in that the differing local surface conditions of the integrated circuits of the workpiece (G), such as reflection and scattering behaviour of the metallised surface and of the materials lying thereunder, are compensated.

8. Process according to claim 1 and 6, characterised in that the recording laser beam (7) and the scanning laser beam (9') are reflected, in a laser beam collector (C) with a recording laser beam splitter (13) and with a scanning laser beam mirror (14), into a lens head (D), and in that, with the recording laser beam splitter (13), a part of the recording laser beam (7) is branched off into a recording laser beam detector (15).

9. Process according to claim 8, characterised in that the recording laser beam (7) and the scanning laser beam (9') are guided in the laser beam collector (C), on the same axis, onto a scanning laser beam splitter (18) of the lens head (D), from where the scanning laser beam (9') and the recording laser beam (7) are guided through the lens (19) onto the workpiece (G), and in that a part of the reflected scanning laser beam (9') is reflected through the scanning laser beam splitter (18) into a turret head (E).

10. Process according to the claims 8 and 9, characterised in that the laser light signals detected in detectors (15, 18', 23) and/or out of the lens head (D) and/or out of the turret head (E) are evaluated, and in that the correct functioning position is arrived at, or is picked up.

11. Apparatus for performing the process according to claim 1, characterised in that a recording laser device (1), for producing a recording laser beam (7, 49), with downstream-located modulator (3), contains an expander (5), and a lens (19); and, for the evaluation of the received signals, a beam splitter (52) of the light (51) reflected from the workpiece, is associated with a detector (53) with several fields.

12. Apparatus according to claim 11, characterised in that the beam splitter is a polarising beam splitter (54), which is provided as analyser of the electro-optical modulator (3).

13. Apparatus according to claim 11, characterised in that the recording laser apparatus additionally contains a scanning laser device (9) with a different wavelength from the recording laser device (1), and in that it is provided with a dichroic beam splitter (56) for superimposing of the scanning laser beam (55) onto the same axis as the recording laser beam (49) and for subsequent separating of the scanning laser beam (55) on a detector (53).

14. Apparatus according to claim 11, characterised in that a control apparatus for obtaining the correct mutual position of the integrated switching circuit (57) and of the laser radiation, contains a control circuit which consists of a operating amplifier with downstream-located high voltage amplifier and at least one piezo-electric drive (21).

15. Apparatus for performing the process according to claims 8 to 10, characterised in that the lens head (D), with the turret head (E) for receiving the laser beams (7, 9'), form a common optical module (F) whose optical connecting part is only the scanning laser beam splitter (18).

16. Apparatus according to claim 15, characterised in that the laser beam collector (C) is provided with a recording laser beam detector (15).

17. Apparatus according to claim 15, characterised in that the turret head (E) is provided with at least two of these three units: scanning laser beam detector (23), shearing interferometer eyepiece (24), and microscope eyepiece (25) with cross wires.

18. Apparatus according to claim 15, characterised in that the recording laser beam source (A) and/or the scanning laser beam source (B) is provided with, in each case, at least one pinhole diaphragm (2', 11) inside the expander (4, 10).

19. Apparatus according to claim 17, characterised in that the microscope eyepiece (25) of the lens head (E) is provided with a recording laser suppression filter (25').

20. Apparatus according to claim 15, characterised in that in the direction of the recording- and scanning laser beams (17) which are guided on the same axis, behind the scanning laser beam splitter (18), a detector (18') is arranged.

FIG.1a

FIG.1b

FIG.2

FIG.3

FIG.4

D

FIG.5

FIG.7

E

FIG.6

FIG. 8

FIG. 9

FIG. 10

# FIG.11

# FIG.12

# FIG.13

FIG.14

FIG.15

FIG.16a    FIG.16b    FIG.16c